# EUROPEAN PATENT SPECIFICATION

(11) **EP 3 457 108 B1**
(45) Date of publication and mention of the grant of the patent: **10.08.2022**
(21) Application number: 18176323.6
(22) Date of filing: 06.06.2018
(51) Int. Cl.: G01N 1/22, B01D 53/22, B01D 53/26, G01N 1/24, G01N 1/40, B01D 63/06

(54) **PORTABLE SAMPLING SYSTEM**
TRAGBARES PROBENAHMESYSTEM
SYSTÈME D'ÉCHANTILLONNAGE PORTABLE

(30) Priority: 14.09.2017 US 201762558799 P; 19.12.2017 US 201715847635; 19.12.2017 US 201715847723
(43) Date of publication of application: 20.03.2019
(73) Proprietor: Perma Pure, LLC, Lakewood, NJ 08701 (US)
(72) Inventor: LIN, Yuan, Changning District, Shanghai (CN); SUNADA, Craig, Manasquan, NJ 08736 (US); PENG, Sui, Changning District, Shanghai (CN); MOHAMED, Hamza, Lakewood, NJ 08701 (US)
(74) Representative: Blumbach · Zinngrebe Patentanwälte PartG mbB

(56) References cited:
- EP-A1- 0 537 599
- US-A- 5 042 500
- US-A1- 2006 021 615
- US-A1- 2007 107 594
- US-B1- 6 346 142

## Description

### Field of the Invention

This invention pertains generally to gas dehumidification and more specifically to portable devices for drying stack gases.

### Background of the Invention

Flue or "stack" gas contains combustion products that are produced when a fuel, such as coal, oil, natural gas, wood or the like is combusted in an industrial furnace, steam-generating boiler, or other large combustion device. These combustion products are released to the air through a flue-gas stack. The combustion products include carbon dioxide, nitrogen, and water vapor, and as well as a small amount of pollutants, including carbon monoxide, oxides of nitrogen and sulfur, and particulates. The levels of certain of these pollutants are subject to regulation and, as such, may require regular monitoring to assure compliance with environmental standards.

Flue gas is often monitored by a continuous emission monitoring system ("CEMS"). A complete CEMS typically includes: (i) sample transport and conditioning equipment, (ii) sample-gas analyzers, and (iii) data-acquisition and reporting equipment. Some CEMS are permanent installations; others include at least some portable elements, such as the sample transport and conditioning equipment.

After a sample of the flue gas is obtained from a stack, it is typically filtered and conditioned by the transport and conditioning equipment to remove moisture and particulates. Such conditioning must not alter the composition of the gas species being monitored in the sample. Filtering and conditioning is important because many sample-gas analyzers require a particulate-free, dry sample gas for reliable and accurate operation. The presence of condensable water vapor and particulates can result in a number of problems, including plugged conduits and flow components, obscured optical-sensing equipment, and can cause pumps, valves and flow meters to fail. Condensed water vapor is particularly problematic because certain components of interest, such as sulfur dioxide, readily dissolve in liquid water. In addition to resulting in an inaccurate (low) reading for sulfur dioxide in the gas stream being analyzed, the dissolved sulfur dioxide reacts with water to form sulfuric acid, which can corrode equipment.

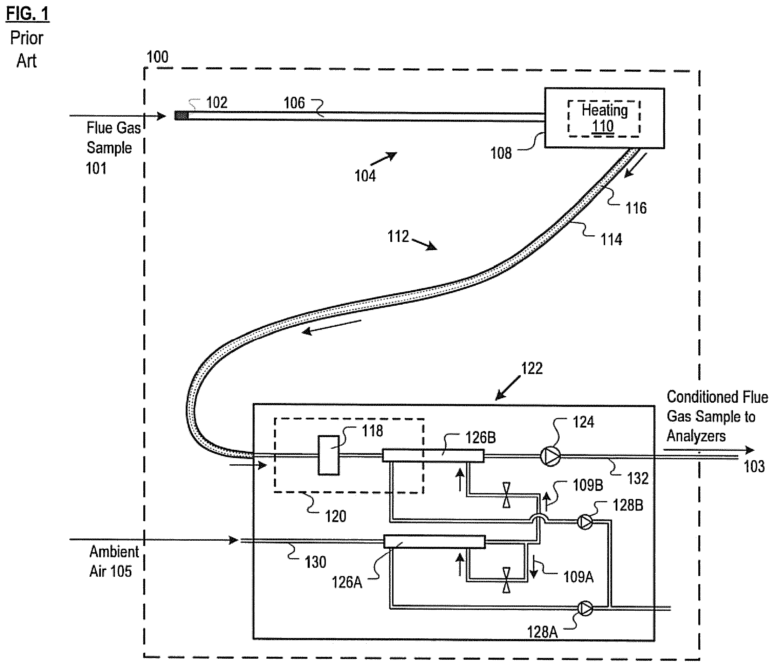

The sample transport and conditioning equipment typically includes a filter, a sample probe, a sample line, and a gas conditioning system. FIG. 1 depicts an embodiment of sample transport and conditioning equipment in the prior art (hereinafter "portable sampling system"). The particular portable sampling system depicted is commercially available from PermaPure, LLC of Lakewood, NJ, as model GASS 35.

As depicted in FIG. 1, portable sampling system **100** includes filter **102,** sample probe **104,** heated transport line **112,** and conditioning system **122,** interconnected as shown.

Sample probe **104** obtains a sample of flue gas from the flue stack. The sample probe includes probe shaft (or "stinger") **106** and probe body **108.** Probe shaft **106,** which is inserted into a flue stack to obtain a sample, comprises a metal, such as stainless steel or Hastelloy, suitable for exposure to high temperatures and the corrosive nature of flue gas. Probe body **108** provides heating, such as via heater **110,** to prevent condensation from occurring, which would knock sulfur dioxide out of the gas sample. Filter **102,** which is intended to filter out particulates from the flue gas sample, is fitted to the distal end of probe shaft **106** Filter **102** is typically a sintered metal or wire-mesh filter capable of filtering out particles as small as 10 microns.

Heated line **112** fluidically couples sample probe **104** to conditioning system **122.** The heated line is typically about 2 to 3 meters (m) in length; this 2 to 3 meters affords a user an ability to place the conditioning system **122** on a supporting surface (*e.g*., the platform on which the user stands) while raising sample probe **104** as necessary to insert into the flue stack to obtain a sample. The heated line comprises insulated heating jacket **114** and tubing **116,** the former enclosing the latter. Heating jacket **114** includes a heating element and thermal insulation. Tubing **116** typically comprises Polytetrafluoroethylene (PTFE) or fluorinated ethylene propylene (FEP). Heated line **112** is controlled to a temperature in the range of about 120 to 180 °C. This line is heated for the same reason that sample probe **104** is heated; that is, to prevent condensation.

Salient elements of conditioning system **122** include filtering elements **118,** heater **120,** two dryers **126A** and **126B** and two vacuum pumps **128A** and **128B,** interrelated as shown. Conditioning system **122** also includes a controller (not depicted) to control the operation of certain components of portable sampling system **100.**

As previously indicated, sample transport and conditioning equipment, such as portable sampling system **100,** must remove moisture from a flue-gas sample. This drying process utilizes a "purge" gas. The source and condition of the gas used as purge gas dictates, to some extent, the layout of the conditioning system. For example, different layouts will be required as a function of whether:
- dry instrument air is available for use purge gas;
- a portion of the flue-gas sample can be used as a purge gas;
- flue gas cannot be used as purge gas, but relatively dry ambient air is available for such purpose and/or the required dew point of the conditioned flue-gas sample is not particularly low; or
- flue gas cannot be used as purge gas and the ambient air is relatively wet and/or the required dew point of the conditioned flue-gas sample is very low.
The use of two dryers and two vacuum pumps in conditioning system **122** enables portable sampling system **100** to be used in situations in which relatively wet ambient air is available as the purge gas and the required dew point of the conditioned flue-gas sample is quite low.

Continuing with the discussion of FIG. 1, sample pump **124** draws flue gas sample **101** into sample probe **104,** through heated line **112** and into conditioning system **122.** Gas sample **101** is filtered via filtering elements **118,** which may include a coalescing filter and an ammonia scrubber. Heater **120** heats the inlet line, filtering elements **118,** and the first half (of the length) of dryer **126B.** The heater includes a temperature sensor (not depicted), which transmits a signal to the system controller (not depicted). Based on the temperature signal, the controller adjusts the temperature as required to maintain a desired temperature in dryer **126B.**

Dryers **126A** and **126B** utilize Nafion^{™}, a sulfonated tetrafluoroethylene based fluoropolymer-coploymer, such as perfluorosulfonic acid (PFSA), tubing. Nafion^{™} is extremely selective at transferring moisture across its surface, such as from one flowing gas stream typically on the inside of the Nafion^{™} tube to another typically on the outside of the tube. Dryer **126A,** in conjunction with vacuum pump **128A,** functions as a dry purge-gas generator. Dryer **126B,** in conjunction with vacuum pump **128B,** dries the flue-gas sample **101,** using the dry purge gas generated by dryer **126A.**

Ambient air **105** is drawn through line **130** into dryer **126A.** The dried air exiting dryer **126A** is split into two streams: recycle stream **109A** and dry purge-gas stream **109B.** Recycle stream **109A** is drawn, under vacuum, across the "outside" of the Nafion^{™} tubing within dryer **126A** as wet ambient air **105** moves through the inside of the Nafion^{™} tubing. The difference in the vapor pressure of water between wet ambient air **105** and recycle **109A** drives moisture from the ambient air.

Dry purge gas stream **109B** is drawn, under vacuum, across the "outside" of the Nafion^{™} tubing of dryer **126B** as gas sample **101** moves through the inside of the Nafion^{™} tubing. The temperature at the inlet of dryer **126B** is controlled to a temperature than is higher than the expected dew point. In some embodiments, the inlet temperature is about 80 °C. Dried sample gas **103** exits dryer **126B** and leaves conditioning system through line **132** for analysis in the gas analyzers (not depicted).

To remove moisture to desired levels, guidelines provide that the flow rate of purge gas **109B** should be from one to three times the flow rate of the flue-gas sample **103** with a recommended vacuum level of 0.4 to 0.5 bar absolute.

Although effective for its intended purpose, there is a drawback to portable sampling system **100;** namely, its weight. As a consequence of the location of a sample port on a flue-stack, an operator might be required to carry the portable sampling system up a considerable number of stairs. Due to the presence of two dryers, two vacuum pumps, filters, and heating equipment, conditioning system **122** weighs about 12.5 kilograms (kg). And heated line **112,** which has an outer diameter of about 8 to 10 centimeters (cm) due to the presence of the heating element and a significant thickness of thermal insulation, weighs about 4.5 kg or more, depending on its length.

US 5 042 500 A discloses an apparatus for conveying a respiratory gas mixture breathed by a patient to a gas analyzer apparatus in which water vapor is effectively extracted from the mixture during its flow from the patient's mouthpiece, mask or head.

In light of the foregoing, there is a need for an improved apparatus to dry gas samples to very low dew points.

### Summary of the Invention

The present invention provides a portable sampling system for sampling gases and removing at least some moisture therefrom, wherein apparatus avoid some of the drawbacks of the prior art. A portable sampling system is set forth in claim 1, wherein preferred embodiments are defined in the dependent claims 2 to 10.

Recognizing that the weight of portable sampling system **100** could be problematic, the present inventors sought to reduce it. The heavy thermal insulation in heated line **112** which couples sample probe **104** to conditioning system **122** and heater **120** for dryer **126B** contributes significantly to the weight of portable sampling system **100.** The inventors reasoned that if a portable sampling system for drying a sample gas to very low dew points with a wet purge gas could be designed that had a relatively reduced heating/insulation requirement, a substantial reduction in weight would be achieved.

It occurred to the inventors that if membrane dryer **126B** *i.e*., the dryer responsible for drying the flue gas sample were moved to the line that couples the sample probe to the conditioning system, the amount of thermal insulation in that line could be reduced. That is, since the dryer will reduce the dew point of the sample gas, condensation would not occur in the line until the temperature drops to substantially lower temperatures than can be tolerated

(without condensation) by heated line **112** of prior-art portable sampling system **100.**

In some versions of prior-art portable sampling system **100,** dryers **126A/126B** comprise 200 tubes of 030 Nafion^{™} disposed within an outer tube or "shell," each Nafion^{™} tube having a length of about 30.5 cm (12 inches) and the shell being about the same length. Rather than simply locating a dryer having the aforementioned configuration into heated line **112,** the inventors redesigned the dryer so that it would also provide the functionality of heated line **112** *i.e.,* fluidically couple the sample probe to downstream equipment and provide the requisite 1.5 m or more of length. In particular, in a dryer for use in a portable sampling system in accordance with the present teachings, a much-reduced number of Nafion^{™} tubes of longer length are used. In the illustrative example, 6 tubes of 050 Nafion^{™} are disposed within an outer tube or "shell," wherein both the Nafion^{™} tubes and the shell are about 1.5 to 3 m in length. That is, in a portable sampling system in accordance with the illustrative embodiment, the dryer replaces heated line **112,** wherein the length of dryer is substantially equal to that of heated line **112.** There are several benefits to this approach.

*The Dew Point of the Sample Gas Drops as it flows through the Dryer.* Since in accordance with the present teachings, a dryer now replaces heated line **112,** the dew point of the sample gas will drop *i.e*., moisture levels will decrease) as the gas proceeds through the dryer, moving toward downstream equipment. Therefore, the temperature of the sample can drop to a lower level than for prior-art system **100** without condensation occurring (since in system **100,** the sample gas is not dried until after it exits heated line **112** and enters conditioning system **122.** As a consequence, the outer tube of the new dryer design requires far less thermal insulation than heated line **112.**

*Improved Temperature Gradient Across the Dryer.* Temperature has several effects on the performance of Nafion^{™}, the net result of which is that the temperature should be relatively warmer at the inlet to the dryer and relatively cooler at its outlet. Due to the lengthening of the dryer in portable sampling systems in accordance with the illustrative embodiment of the invention, a desirable temperature gradient can be established; better than any gradient that can be established in the significantly shorter dryers of prior-art system **100.** So, in addition to the fact that moisture levels drop due to the action of the dryer such that lower temperatures can be tolerated downstream of the probe body, such lower temperatures enable lower dew points to be achieved.

It occurred to the inventors that if a dryer could be operated at deep vacuum levels, such as 0.1 bar absolute pressure or less, the dryer would tend to self-insulate in the manner of a vacuum thermos (*i.e.,* heat loss decreases because conductive heat transfer is greatly reduced). The inventors speculated that the insulating effect of deep vacuum on the purge side of the dryer might keep the sample flue gas warm for a long enough period of time such that moisture would be extracted faster than the temperature drops, thereby preventing condensation from occurring. This could potentially reduce the thermal-insulation requirements of the dryer's shell even further. That, in turn, would further reduce the weight of that dryer relative to heated line **112** of prior-art system **100.** However, operating at deep vacuum was expected to be problematic, as follows.

It is known in the art that when using a membrane dryer, such as Nafion^{™} tubing, a difference in the vapor pressure of water between a sample gas *e.g.,* on the inside of the tubing and a purge gas *e.g.,* on the outside of the tubing drives moisture from the sample gas to the purge gas. Furthermore, it was understood that there needed to be a significant amount of purge gas to carry moisture away from the outer surface of the Nafion^{™} tubing to achieve satisfactory drying.

So, placing the outside of the tubing under vacuum increases the vapor pressure gradient of water between the sample gas and the purge gas, as is desirable. Historically, it was believed that to achieve a satisfactorily low dew point (low moisture level) for a warm, moist sample gas, a significant purge-gas flow rate was important - relatively more important than achieving the deepest possible vacuum. In fact, the guidance in this regard was: (1) that the purge gas flow rate should be from 1x to 3x as great as the sample gas flow rate and (2) the nominal vacuum level should be about 0.5 bar absolute. (*See, e.g.,* http://www.permapure.com/products/gas-sample-dryers/pd-gas-dryers/: "Purge gas should be instrument quality air (-40°C dew point) or nitrogen flowing at two to three times the sample flow rate." It is notable that using, as the purge gas, wet ambient air rather than instrument air, makes it more difficult to achieve low dew points, making purge gas flow rate all the more important in such conditions.)

However, in context of the present invention, the inventors were concerned that the nominal relatively high purge-gas flow rates would cool the dryer too much, increasing the risk of condensation in the dryer. Thus, on the one hand, there was concern about over-cooling and concomitant condensation, and, on the other hand, there was concern that relatively low purge-gas flow rates would impair the dryer's ability to remove moisture, potentially resulting in condensation. So, the inventors were faced with a challenge of how to balance these two competing parameters.

Subsequent testing revealed, quite surprisingly, that at deep vacuum levels i.e., ≤ 0.1 bar absolute and at purge-gas flow rates less than the sample's mass flow rate *e.g*., about 15% to 99% thereof, a Nafion^{™}-based dryer was capable of reducing the dew point of the gas sample to less than 4°C, even when the purge gas is hot, humid air.

In fact, as a consequence of using deep vacuum levels and relatively low purge-rate flows in conjunction with the dryer configuration in portable sampling systems in accordance with the present teachings, the system with a single dryer (and a somewhat reduced overall amount of Nafion^{™}) provides more effective drying than the two Nafion^{™}-based dryers in prior-art sampling system **100.**

And in terms of size and weight reduction, whereas heated line **112** had an outside diameter of 8 to 10 cm and weighed about 4.5 kg for 2.5 m length, a similar-length dryer in portable sampling systems in accordance with the illustrative embodiment has an outer diameter of about 2.5 to 3 cm and is expected to weigh less than 0.5 kg (the dryer itself weighs about 0.14 kg, the balance representing a short length of insulation and some wires).

Thus, a portable sampling system in accordance with an illustrative embodiment of the present invention includes a sample probe, an input/output ("I/O") system, and one membrane dryer that couples the probe to the I/O system.

The sample probe is somewhat similar to the heated probe of system **100,** but in some embodiments, incorporates a vacuum pump capable of reaching deep or near deep vacuum levels. The I/O system, which replaces the conditioning system **122** of system **100,** includes, in some embodiments, only the sample pump, tubing, a flow meter, and one or more valves. Because drying no longer occurs in this location, the term "conditioning" does not apply to this collection of equipment (hence the descriptor "I/O"). Recall that prior-art system **100** included two membrane dryers, two vacuum pumps, a heater, a sample pump, associated tubing, a flow meter, and several valves. As a consequence of its reduced equipment complement, the I/O system of the present invention weighs about 2.3 kg, including the housing (in embodiments in which the vacuum pump is in the probe body), as compared to the 12.5 kg weight of conditioning system **122.** Additionally, the size of the housing that contains I/O system is less than 50 percent of the size of the housing required for conditioning system **122.**

In accordance with some embodiments, the dryer in the portable sampling system is operated such that the purge gas is under "near-deep" vacuum (*i.e.,* greater than 0.1 bar absolute to about 0.2 bar absolute), and more preferably under "deep" vacuum (*i.e.,* 0.1 bar absolute or less). Substantially lower flow rates for the purge gas (as low as about 12% of the gas sample rate on a mass basis) than for prior-art system **100** have been found to provide acceptable drying performance. Optimal performance is provided by the highest purge flow rate that does not cause excessive cooling across the dryer. That maximum purge flow rate is best determined by simple experimentation, and may in fact be limited by the operating characteristics of the pump. However, as a general recommendation, the flow rate of the purge gas should be in the range of about 15% to 99% of the mass flow rate of the sample gas.

### Brief Description of the Drawings

**FIG. 1** depicts a portable sampling system in the prior art.
**FIG. 2** depicts a portable sampling system in accordance with an illustrative embodiment of the present invention.
**FIG. 3** depicts a cross-sectional view of a membrane dryer for use in the portable sampling system of FIG. 2.
**FIG. 4** depicts a method for drying in accordance with an illustrative embodiment of the present invention.
**FIG. 5** depicts a plot of dryer length as function of the ratio of the purge-gas flow rate to the sample-gas flow rate.

### Detailed Description

The terms below are provided with the following explicit definitions for use in this disclosure and the appended claims:
- The term **"wet,"** when used to describe the purge gas or ambient air, means having a dew point in the range of 15 to 30 °C.
- The phrase **"deep vacuum"** means a vacuum of 0.1 bar absolute or less.
- The phrase **"near deep vacuum"** means a vacuum of greater than 0.1 bar absolute and less than or equal to 0.2 bar absolute.
- The phrase **"shell side"** of a membrane dryer means the region on the outside of the tubes of the drying membrane (*e.g.,* PFSA, *etc*.) and inside of the outer tube that contains the tubes of the drying membrane.
- The phrase **"tube side"** of a membrane dryer means the region within the tubes of the drying membrane (*e.g.,* PFSA, *etc*.).
- The phrase **"purge gas"** means a gas that is introduced to the shell side of a membrane dryer, which is to be swept over the outside of the tubes for assisting in removing moisture from a gas that flows within the tubes.
- The phrase **"very flexible"** means something that is capable of being formed into a loop (*i.e.,* a circle) having a diameter of 8 inches (-20 cm) or less.
- The term **"substantially"** means within +/-15 percent of a nominal value. For example, if a first member and a second member are described as being "substantially the same length," then the first member can have a length that is in the range of 15% less to 15% greater than the length of the second member.
- The term **"about"** means within +/- 15 percent of a nominal value; that is, synonymous with "substantially."
- The term **"gas"** means one or more gases (a substance having a single defined thermodynamic state at room temperature) and/or one or more vapors (a substance in which the gas phase and liquid phase can co-exist). For example, "flue gas" typically includes both gas and vapor, and more than one of each.

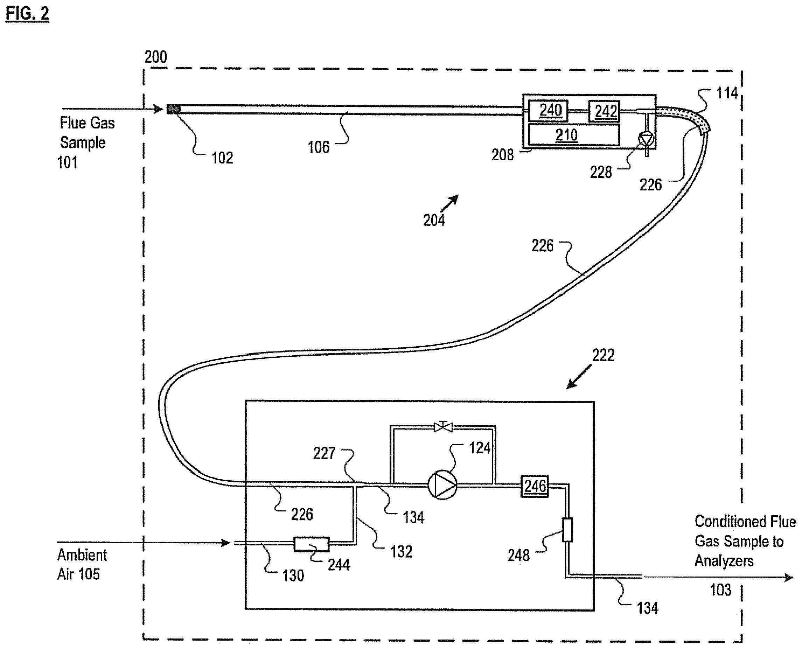

FIG. 2 depicts portable sampling system **200** in accordance with the illustrative embodiment of the present invention. The salient features of portable sampling system **200** include sample probe **204,** dryer **226,** and I/O system **222,** interconnected as shown.

Sample probe **204** obtains sample **101** of flue gas from a flue stack (in conjunction with pump **124** in I/O system **222**). The sample probe includes probe shaft (or "stinger") **106** and probe body **208.** Probe shaft **106,** which is inserted into a flue stack to obtain a sample, comprises a metal, such as stainless steel or Hastelloy, suitable for exposure to high temperatures and the corrosive nature of flue gas.

Filter **102,** which is intended to filter out particulates from the flue gas sample, is fitted to the distal end of probe shaft **106** Filter **102** is typically a sintered metal or wire-mesh filter capable of filtering out particles as small as 10 microns.

In the illustrative embodiment, probe body **208** includes heater **210,** ammonia scrubber **240,** optional inlet dew-point sensor **242,** and vacuum pump **228.** Heater **210** heats the probe body to prevent condensation from occurring, which would knock sulfur dioxide out of the gas sample. Also, heater **210** is used to heat ammonia scrubber **240.**

Ammonia scrubber **240** is used to remove ammonia from flue-gas sample **101.** The ammonia scrubber protects the downstream gas analyzer from clogging due to the formation of ammonium salts. Ammonia, which is a highly reactive gas, is occasionally added to stack gases to reduce the nitrogen oxide content of the gases by conversion to nitrogen and water. But when present in gas samples, ammonia will readily react with other components in the gas sample, such as sulfur dioxide, to form ammonium salts. This salt is relatively low-boiling, so it is present as a gas at the higher temperatures in the stack. But when the flue-gas sample cools down while passing dryer **226,** the salt precipitates out as a solid, clogging the dryer or downstream analyzer.

Ammonia scrubber **240** comprises a polysulfone shell that surrounds a stainless-steel-shell housing or, alternatively, both the shell and housing are stainless steel. The housing contains a phosphoric-based scrubbing media and inert ceramic burl saddles. The water vapor in the sample activates the scrubbing media to produce phosphoric acid. The phosphoric acid reacts with the ammonia, in an acid-base neutralization reaction, producing a phosphate of ammonia. This compound is a solid even at elevated temperatures, and deposits immediately within the ammonia scrubber as a visible salt residue. For proper operation, the ammonia scrubber should be kept at a temperature above the sample dew point to avoid the loss of water-soluble analytes. Heater **240,** or a heater integrated *e.g*., an electrical resistance strip heater, *etc*. with ammonia scrubber **240,** is used for this purpose.

Inlet dew point sensor **242,** if present, determines the dew point of flue-gas sample **101.**

Vacuum pump **228,** which is commercially available, is used to pull a near-deep vacuum *i.e.,* greater than 0.1 bar absolute to about 0.2 bar absolute or, preferably, a deep vacuum i.e., 0.1 bar absolute or less on the outside of the Nafion^{™} tubes within dryer **226.**

Dryer **226** provides at least a dual functionality; in addition to drying, it fluidically couples the sample probe **204** to I/O system **222** and provides the requisite 1.5 meters or more of length. A short length of heating jacket **114** encloses the first 0.1 m or so of dryer **226** to ensure that no cooling -and hence no condensation- occurs.

In accordance with the present teachings, dryer **226** comprises relatively few tubes, *e.g*., less than twenty and more typically in the range of 6 to 12 tubes, of a suitable PFSA membrane disposed within a thermally insulated "shell." In the illustrative embodiment, six tubes of 050 Nafion^{™} (inner diameter of 0.05 inches (0.127 cm)) is used. In the illustrative embodiment, the shell comprises tubing made of fluorinated ethylene propylene (FEP). In the illustrative embodiment in which six tubes of 050 Nafion^{™} are used, the FEP tubing has an inner diameter of 3/8 of inch (0.85 cm). In some embodiments, both the Nafion^{™} tubes and the shell are about the same length; in the illustrative embodiment, that length is about 1.5 m, but more generally is in the range of about 1.5 m to 5 m.

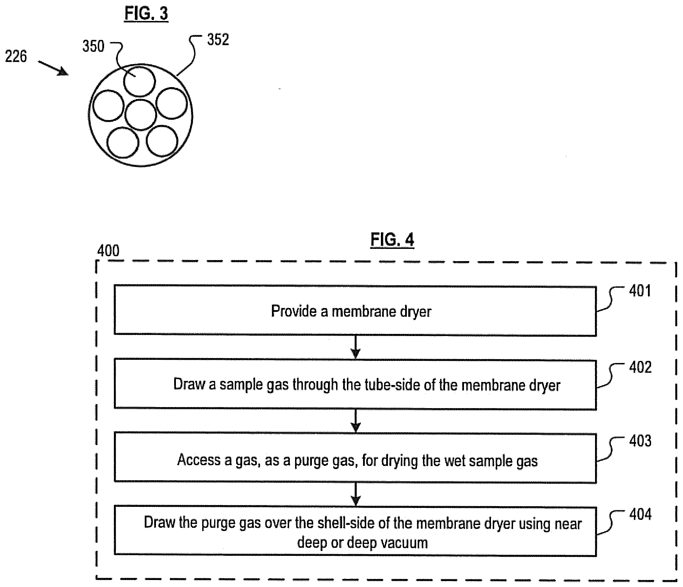

FIG. 3 depicts a cross-sectional view of dryer **226,** wherein six Nafion^{™} tubes **350** are disposed within shell **352.** In some other embodiments, other PFSA membranes may suitably be used. Furthermore, by virtue of the length of the dryer, the relatively low number of Nafion^{™} tubes in the dryer, and the low value for Young's modulus of the materials used (*i.e.,* Nafion^{™} and FEP tubing), the dryer is very flexible.

In conjunction with the present disclosure, those skilled in the art will be able to design, make, and use dryers incorporating PFSA membranes.

The distal end of dryer **226** enters I/O system **222.** I/O system **222** includes vacuum pump **124,** optional dew point sensor **246,** flow meter **248,** and particulates filter **244.** The I/O system is contained in a housing, typically made of metal or hard plastic.

Through the action of vacuum pump **228,** I/O system **222** draws in ambient moist air **105,** which serves as the purge gas for dryer **226.** In the illustrative embodiment, vacuum pump **228** is situated in probe body **208.** However, in some other embodiments (not depicted), vacuum pump **228** is disposed in I/O system **222** rather than the probe body, wherein a tube running alongside dryer **226** conveys the purge gas back to the vacuum pump.

Air **105** is filtered in filter **244,** for removal of particulates. Air filter **244,** which comprises a fluorocarbon borosilicate glass microfiber element (commercially available from United Filtration Systems of Sterling Heights, MI or others), is suitable for removing particulates having a size 1 micron or greater. The filtered air is delivered to distal end **227** of dryer **226** via tubing **132,** which includes a flow restriction (not depicted) to throttle the flow of air into the dryer. The flow restriction can be implemented as a hole in a plug (*i.e.,* an orifice), a needle valve, or the like. Alternatively, restriction tubing can be used, with employs a longer length of tubing of larger diameter, which is advantageous because it is less likely to be blocked by a particulate that passes filter **244.**

Air **105,** which is not dried as in prior-art system **100,** is delivered to the "shell" side of dryer **226,** passing over the outside of the Nafion^{™} tubes therein. In some other embodiments, air **105** is subjected to moisture removal, but not via a PFSA-based dryer. For example, in such other embodiments, air **105** is passed through a dessicator or a condensing cooler.

In addition to drawing in ambient air, I/O system **222** outputs the conditioned flue-gas sample **103** to the gas analyzers (not depicted). The conditioned flue-gas sample exits dryer **226** into conduit **134** and is drawn through vacuum pump **124** which provides the suction for drawing flue gas sample **101** from a flue-gas stack. Conditioned flue-gas sample **103** then passes through in-line optional outlet dew-point sensor **246** (if present), flow meter **248,** and exits I/O system **222** to gas analyzers for analysis.

FIG. 4 depicts method **400** for drying a gas stream to a low dew point, such as 4 °C or less, using a wet gas source, such as ambient air. Method **400** can be used for drying flue-gas gas samples, for subsequent analysis, as in the illustrative embodiment. Furthermore, method **400** can be used for any application in which a dry purge gas is unavailable and a gas stream must be dried to low dew points *e.g*., 4°C or less. It is to be understood that although portable sampling system **200** was developed for use with gas sources that are wet (*e.g*., wet ambient air, *etc*.), the sampling systems and methods disclosed herein can be used for drying a sample gas when a dry gas source *e.g*., dry instrument air, relatively dry ambient air, *etc.* is available.

In accordance with operation **401,** a membrane dryer is provided. The membrane preferably, but not necessarily, comprises PFSA. As previously noted, PFSA dryers include Nafion^{™} dryers, among others. A sample gas that requires drying is drawn through the inside of the drying membranes (the tubes of PFSA membrane, *etc*.), per operation **402.** In operation **403,** a gas, such as moist ambient air, is accessed for use as the purge gas. The gas is drawn over the shell-side of the membrane dryer at either near-deep or deep vacuum, in accordance with operation **404.**

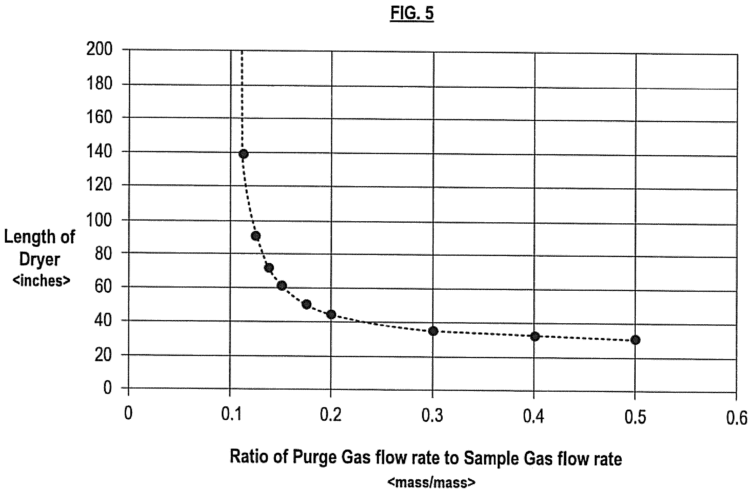

FIG. 5 depicts a plot of dryer length as a function of the ratio of the mass flow rates of the purge gas to the sample gas ("**gas-flow ratio**"). More specifically, the y-axis provides the length, in inches, of PD-6T-based dryer required to achieve -10°C dew point for 1 liter per minute (Ipm) of sample gas flow. FIG. 5 is based on the following conditions:
- dryer used: PD-6T (6 tubes of 050 Nafion^{™} (inner diameter of 0.05 inches (0.127 cm)));
- vacuum level: deep vacuum (0.1 bar absolute or less) on the outside of the tubes within the dryer;
- sample gas: inlet: 70°C dew point outlet: -10°C dew point;
- purge gas: inlet: 15°C dew point.

FIG. 5 shows that for a PD-6T-based dryer having a length of 1.5 m (59 inches) and under the stated conditions, the target moisture level (*i.e.,* -10°C dew point) of the sample gas is met, surprisingly, at a gas-flow ratio as low as about 0.15. The length-versus-gas-flow-ratio relation has a generally exponential form at ratios below about 0.2. Per FIG. 5, for PFSA dryers running at 0.1 bar absolute, there is a "knee" in the curve between 0.1 and 0.2 gas flow ratio where performance drops off dramatically and the length of the drying membrane required to achieve acceptably low dew point becomes unacceptably large. A significant amount of performance benefit is achieved by increasing the gas flow ratio to 0.3, but above that, there is a relatively minor performance increase while, at the same time, the size of the vacuum pump increases tremendously due to the increased gas flow.

Assuming the gas-flow ratio remains constant, the length of drying membrane required to reach the target dew point increases linearly with the flow rate of the gas sample. In embodiments in which a PD-6T-based dryer shorter than 1.5m is used, one can reduce the sample flow rate to achieve the target dew point. In this regard, most gas analyzers require 1 lpm of gas flow and, consequently, most portable sampling/conditioning systems are sized for 1.5 Ipm (to provide margin for the analyzer).

It will be clear to those skilled in the art that in embodiments in which a dryer contains more than six tubes of 050 Nafion^{™}, the length of the dryer required for a given set of conditions would be reduced relative to a PD-6T dryer. As a first order approximation, the requirement scales linearly. That is, for a Nafion^{™}-based dryer with twice the number of tubes (*i.e.,* twelve) than a PD-6T dryer, the length of the dryer is reduced by a factor of two. The shape of the plot depicted in FIG. 5 applies to all PFSA membrane dryers when purged at 0.1 bar absolute, although for PFSA membranes other than Nafion^{™}, additional tubes or length will required.

There is no specific limitation on the maximum gas-flow ratio, except that, as previously explained, high purge-gas flow rates might cool the dryer to the extent that condensation occurs therein. In that regard, optional dew-point sensor **246** can be used in a control loop that adjusts purge-gas flow rate, such as to optimize the cooling/temperature gradient across the dryer while avoiding any condensation. As previously noted, the flow rate of the purge gas is dictated, to some extent, by the operation of the vacuum pump (*i.e.,* the pump's operating curve). Additionally, as purge-gas flow rates increase, the size of the vacuum pump will increase, as well, incurring cost and weight penalties.

In some embodiments, the gas flow ratio is less than 1 (*i.e.,* the mass flow rate of the purge gas is less than the mass flow rate of the gas sample). More particularly, in some embodiments, the gas flow ratio should be in the range of about 0.12 to about 0.99. In some other embodiments, the gas flow ratio is less than about 0.50. And in some additional embodiments, the gas flow ratio is in the range of about 0.15 to about 0.50. In some preferred embodiments, the gas flow ratio is in the range of about 0.15 to 0.3. In some further embodiments, the gas flow ratio is in a range of about 0.12 to 0.2.

## Claims

1. A portable sampling system (200) for sampling gases from a flue stack and removing at least some moisture from the sampled gases, the system comprising:
a sample probe (204) that withdraws a sample of a gas, wherein the sample probe includes:
a probe shaft (106) that is dimensioned and arranged to be inserted into the flue stack, and
a probe body (208) coupled to the probe shaft, wherein the probe body includes a heater and an ammonia scrubber (240);
an input/output system (222) contained in a housing, wherein the input/output system includes a first vacuum pump (124) that is arranged to provide suction to draw the sample of gas into the sample probe, and further wherein the input/output system receives and filters gas from the ambient environment to use as a purge gas;
a dryer (226) comprising a perfluorosulfonic acid membrane in the form of plural tubes (350), the tubes disposed within a shell (352) in the form of tubing, wherein:
(i) the dryer is fluidically coupled to and between the sample probe and the input/output system,
(ii) the dryer is flexible,
(iii) a portion of the dryer is covered by a heating jacket (114), wherein the portion is less than about 20% of a total length of the dryer,
(iv) an interior of the tubes receive the sample of gas, and
(v) an exterior of the tubes are exposed to the purge gas from the input/output system; and
a second vacuum pump (228) for drawing the gas from the ambient environment into the input/output system, and from the input/output system, as purge gas, to the dryer.

2. The portable sampling system of claim 1 wherein the second vacuum pump (228) is located in the sample probe (204).

3. The portable sampling system of either of claims 1 or 2 wherein the second vacuum pump draws a near-deep vacuum in a region defined between the interior of the shell and the exterior of the tubes.

4. The portable sampling system of either of claims 1 or 2 wherein the second vacuum pump draws a deep vacuum in a region defined between the interior of the shell and the exterior of the tubes.

5. The portable sampling system of any of claims 1-4 wherein the plural tubes comprise less than 20 tubes.

6. The portable sampling system of any of claims 1-5 wherein the dryer is capable of being formed into a loop having diameter of 8 inches or less.

7. The portable sampling system of claim 1 wherein the second vacuum pump (228) is located in the input/output system.

8. The portable sampling system of any of claims 1-7 wherein a mass flow rate of the purge gas is less than a mass flow rate of the sample of gas.

9. The portable sampling system of any of claims 1-8 wherein the dryer has an inlet end and an outlet end, and wherein:
the interior of the tubes receives the sample of gas at the inlet end of the dryer; and
the sample of gas and the purge gas flow in opposite directions through the dryer.

10. The portable sampling system of any of claims 1-9 wherein the ratio of a mass flow rate of the purge gas to a mass flow rate of the sample gas is in a range of about 0.12 to 0.3.

## Patentansprüche

1. Tragbares Probenahmesystem (200) zum Nehmen von Gasproben aus einem Abgasschacht und zum Entfernen von zumindest etwas Feuchtigkeit aus den entnommenen Gasproben, wobei das System umfasst:
eine Probensonde (204), mit der eine Gasprobe entnommen wird, wobei die Probensonde umfasst:
einen Sondenschaft (106), der so bemessen und ausgebildet ist, dass er in den Abgasschacht eingeführt werden kann, und
einen mit dem Sondenschaft verbundenen Sondenkörper (208), wobei der Sondenkörper eine Heizung und einen Ammoniakwäscher (240) umfasst,
ein in einem Gehäuse aufgenommenes Ein-/Ausgangssystem (222), wobei das Ein-/Ausgangssystem eine erste Vakuumpumpe (124) umfasst, die dafür ausgebildet ist, einen Sog bereitzustellen, um die Gasprobe in die Probensonde einzusaugen, und wobei das Ein-/Ausgangssystem ferner Gas aus der Umgebung aufnimmt und filtert, um es als Spülgas zu verwenden,
einen Trockner (226), der eine Perfluorsulfonsäure-Membran in Form mehrerer Röhren (350) umfasst, wobei die Röhren innerhalb einer Hülle (352) in Form einer Röhre angeordnet sind, wobei:
(i) der Trockner in fluiddurchlässiger Verbindung mit der Probensonde und dem Ein-/Ausgangssystem steht und zwischen diesen angeordnet ist,
(ii) der Trockner flexibel ist,
(iii) ein Abschnitt des Trockners von einem Heizmantel (114) bedeckt ist, wobei der Abschnitt weniger als ca. 20 % einer Gesamtlänge des Trockners ausmacht,
(iv) in einem Inneren der Röhren die Gasprobe aufgenommen wird, und
(v) ein Äußeres der Röhren dem Spülgas von dem Ein-/Ausgangssystem ausgesetzt ist, und
eine zweite Vakuumpumpe (228) zum Ansaugen des Gases aus der Umgebung in das Ein-/Ausgangssystem und von dem Ein-/Ausgangssystem als Spülgas zu dem Trockner.

2. Tragbares Probenahmesystem nach Anspruch 1, wobei die zweite Vakuumpumpe (228) in der Probensonde (204) angeordnet ist.

3. Tragbares Probenahmesystem nach einem der Ansprüche 1 oder 2, wobei die zweite Vakuumpumpe ein nahezu tiefes Vakuum in einem Bereich erzeugt, der zwischen dem Inneren des Mantels und der Außenseite der Röhren definiert ist.

4. Tragbares Probenahmesystem nach einem der Ansprüche 1 oder 2, wobei die zweite Vakuumpumpe ein tiefes Vakuum in einem Bereich erzeugt, der zwischen dem Inneren des Mantels und der Außenseite der Röhren definiert ist.

5. Tragbares Probenahmesystem nach einem der Ansprüche 1 - 4, wobei die mehreren Röhren weniger als 20 Röhren umfassen.

6. Tragbares Probenahmesystem nach einem der Ansprüche 1 - 5, wobei aus dem Trockner eine Schlaufe mit einem Durchmesser von 8 Zoll oder weniger gebildet werden kann.

7. Tragbares Probenahmesystem nach Anspruch 1, wobei die zweite Vakuumpumpe (228) in dem Ein-/Ausgangssystem angeordnet ist.

8. Tragbares Probenahmesystem nach einem der Ansprüche 1 - 7, wobei eine Massendurchflussrate des Spülgases geringer ist als eine Massendurchflussrate der Gasprobe.

9. Tragbares Probenahmesystem nach einem der Ansprüche 1 - 8, wobei der Trockner ein Einlassende und ein Auslassende aufweist und wobei:
die Gasprobe im Inneren der Röhren am Einlassende des Trockners aufgenommen wird und
die Gasprobe und das Spülgas in entgegengesetzten Richtungen durch den Trockner strömen.

10. Tragbares Probenahmesystem nach einem der Ansprüche 1 - 9, wobei das Verhältnis einer Massendurchflussrate des Spülgases zu einer Massendurchflussrate der Gasprobe in einem Bereich von etwa 0,12 bis 0,3 liegt.

## Revendications

1. Système d'échantillonnage portable (200) pour l'échantillonnage de gaz à partir d'un carneau et l'élimination d'au moins une partie de l'humidité à partir des gaz échantillonnés, le système comprenant :
une sonde d'échantillonnage (204) qui prélève un échantillon d'un gaz, la sonde d'échantillonnage incluant :
une tige de sonde (106) qui est dimensionnée et conçue pour être insérée dans le carneau, et
un corps de sonde (208) couplé à la tige de sonde, le corps de sonde incluant un élément chauffant et un épurateur d'ammoniac (240) ;
un système d'entrée/sortie (222) contenu dans un boîtier, le système d'entrée/sortie incluant une première pompe à vide (124) qui est conçue pour fournir une succion pour aspirer l'échantillon de gaz vers la sonde d'échantillonnage, et en outre le système d'entrée/sortie recevant et filtrant un gaz provenant de l'environnement ambiant afin de l'utiliser comme un gaz de purge ;
un séchoir (226) comprenant une membrane d'acide perfluorosulfonique sous la forme de nombreux tubes (350), les tubes étant disposés au sein d'une enveloppe (352) sous la forme d'une tubulure, où :
(i) le séchoir est couplé de manière fluidique à et entre la sonde d'échantillonnage et le système d'entrée/sortie,
(ii) le séchoir est flexible,
(iii) une partie du séchoir est recouverte par une chemise chauffante (114), la partie constituant moins d'environ 20 % d'une longueur totale du séchoir,
(iv) un intérieur des tubes reçoit l'échantillon de gaz, et
(v) un extérieur des tubes est exposé au gaz de purge provenant du système d'entrée/sortie ; et
une seconde pompe à vide (228) pour aspirer le gaz à partir de l'environnement ambiant vers le système d'entrée/sortie, et à partir du système d'entrée/sortie, comme gaz de purge, vers le séchoir.

2. Système d'échantillonnage portable selon la revendication 1, dans lequel la seconde pompe à vide (228) est située dans la sonde d'échantillonnage (204).

3. Système d'échantillonnage portable selon l'une ou l'autre des revendications 1 ou 2, dans lequel la seconde pompe à vide aspire un vide quasi-poussé dans une région définie entre l'intérieur de l'enveloppe et l'extérieur des tubes.

4. Système d'échantillonnage portable selon l'une ou l'autre des revendications 1 ou 2, dans lequel la seconde pompe à vide aspire un vide poussé dans une région définie entre l'intérieur de l'enveloppe et l'extérieur des tubes.

5. Système d'échantillonnage portable selon l'une quelconque des revendications 1 à 4, dans lequel les nombreux tubes comprennent moins de 20 tubes.

6. Système d'échantillonnage portable selon l'une quelconque des revendications 1 à 5, dans lequel le séchoir est apte à être mis en forme selon une boucle ayant un diamètre de 8 pouces ou moins.

7. Système d'échantillonnage portable selon la revendication 1, dans lequel la seconde pompe à vide (228) est située dans le système d'entrée/sortie.

8. Système d'échantillonnage portable selon l'une quelconque des revendications 1 à 7, dans lequel un débit massique du gaz de purge est inférieur à un débit massique de l'échantillon de gaz.

9. Système d'échantillonnage portable selon l'une quelconque des revendications 1 à 8, dans lequel le séchoir possède une extrémité d'entrée et une extrémité de sortie, et dans lequel :
l'intérieur des tubes reçoit l'échantillon de gaz au niveau de l'extrémité d'entrée du séchoir ; et
l'échantillon de gaz et le gaz de purge circulent dans des directions opposées à travers le séchoir.

10. Système d'échantillonnage portable selon l'une quelconque des revendications 1 à 9, dans lequel le rapport d'un débit massique du gaz de purge sur un débit massique du gaz échantillon est dans une plage d'environ 0,12 à 0,3.
